# EUROPÄISCHE PATENTANMELDUNG

(11) **EP 4 163 894 A1**
(43) Veröffentlichungstag der Anmeldung: **12.04.2023**
(21) Anmeldenummer: 22000225.7
(22) Anmeldetag: 05.10.2022
(51) Int. Cl.: G08G 1/01, G08G 1/0968, G08G 1/14

(54) **VERFAHREN UND PARKLEITSYSTEM ZUR ZUWEISUNG EINES PARKPLATZES FÜR EIN FAHRZEUG UND ZUR NAVIGATION DES FAHRZEUGS ZU DEM PARKPLATZ**

(30) Priorität: 05.10.2021 DE 102021125861
(71) Anmelder: Graphmasters SA, 3095 Spiegel b. Bern (CH)
(72) Erfinder: Heise, Sebastian, D-32369 Rahden (DE)
(74) Vertreter: Schwarz, Diethelm

(57) **Zusammenfassung**

Die Erfindung betrifft ein Parkleitsystem (10) und ein Verfahren zur Zuweisung eines Parkplatzes für ein Fahrzeug (5, 8, 9, 11, 17, 18) und zur Navigation des Fahrzeugs (5, 8, 9, 11, 17, 18) zu dem Parkplatz mit einer Erfassungseinheit zur Erfassung eines Belegungszustands eines Parkplatzes und/oder einer mehrere Parkplätze enthaltenden Parkfläche (1, 2, 3), mit wenigstens einem mobilen, Endgerät (30), mit dem eine Anforderung wenigstens eines Fahrzeugführers für einen Parkplatz für sein Fahrzeug (5, 8, 9, 11, 17, 18) zum Erreichen eines Zielortes an das Parkleitsystem übermittelbar ist, welche Anforderung momentane Positionsdaten des Fahrzeugs (5, 8, 9, 11, 17, 18) umfasst. Dabei ist das Parkleitsystem (10) zu einer der Anforderung entsprechenden Auswahl eines verfügbaren Parkplatzes und zum Übermitteln eines Auswahlvorschlags eines Parkplatzes an das mobile Endgerät (30) ausgebildet und umfasst ein Navigationssystem, das zur Ermittlung einer Streckenführung von dem Standort des Fahrzeugs (5, 8, 9, 11, 17, 18) zum Zeitpunkt der Parkplatzanforderung bis zu dem verfügbaren Parkplatz ausgebildet ist. Das Parkleitsystem (10) zeichnet sich dadurch aus, dass es zu einer mit der Streckenführung rückgekoppelten zur Parkplatzauswahl ausgebildet ist.

## Beschreibung

Die Erfindung betrifft ein Verfahren zur Zuweisung eines Parkplatzes für ein Fahrzeug und zur Navigation des Fahrzeugs zu dem Parkplatz gemäß dem Oberbegriff des Anspruchs 1 und ein Parkleitsystem zur Zuweisung eines Parkplatzes für ein Fahrzeug und zur Navigation des Fahrzeugs zu dem Parkplatz gemäß dem Oberbegriff des Anspruchs 13.

Derartige Systeme und Verfahren sind bereits in unterschiedlichen Ausführungen bekannt. In Innenstädten erfolgt eine Zuweisung eines Parkplatzes an ein Fahrzeug durchaus noch auf einfache Art mithilfe von Anzeigetafeln, die vorhandene Parkhäuser oder Parkflächen, deren Lage und die Anzahl der jeweils verfügbare Parkplätze anzeigen. Auf diese Art findet eine Lenkung der Verkehrsteilnehmer zu freien Parkplätzen statt.

Daneben werden bei derartigen Systemen anstatt Anzeigetafeln auch Mobilfunk-Anwendungen eingesetzt, um Lage- und Belegungsinformationen von Parkhäusern oder Parkflächen anzuzeigen, und die Verkehrsteilnehmer zu diesen zu leiten.

Im Einzelnen betrifft etwa die EP 2 309 472 A2 ein Parkleitsystem für eine Parkfläche, insbesondere an Tank- und/oder Rastplätzen an Autobahnen, mit Parkplatzmarkierungen zum Markieren von Parkplätzen mindestens zweier verschiedener Größen, wobei die jeweiligen Parkplatzgrößen insbesondere auf den Platzbedarf von PKW und LKW abgestimmt sind, sowie ein Verfahren zum Betrieb eines solchen Parkleitsystems. Es wird vorgeschlagen, die jeweiligen Parkplatzgrößen variabel auf den Platzbedarf von PKW und LKW abzustimmen, wobei zumindest ein Teil der Parkplatzmarkierungen elektronisch derart zu- und abschaltbar ist, sodass variabel eine unterschiedliche Anzahl an Parkplätzen mindestens zweier Größen anzeigbar ist und zumindest ein Teil der Parkfläche durch Umschalten der variablen Parkplatzmarkierungen wahlweise in eine größere Anzahl an Parkplätzen kleinerer Größe oder in eine kleinere Anzahl an Parkplätzen größerer Größe unterteilbar ist.

Aus der EP 2 713 354 A1 ist ein Parkleitsystem für ein Verkehrswegenetz mit mindestens einem Parkareal bekannt, in welchem Stellplätze für Fahrzeuge an öffentlichen Verkehrswegen angeordnet sind. Das Parkleitsystem weist Bezahleinrichtungen zur Entrichtung von Parkgebühren, eine Auswertungseinrichtung zur Erfassung eines Belegungszustandes der Stellplätze und Informationseinrichtungen zur Ausgabe einer erfassten Stellplatzbelegung an einen Stellplatz suchende Fahrer auf. Dabei wird eine Bezahleinrichtung durch ein vom Fahrer mitgeführtes Endgerät gebildet, welches eine Ortungseinheit zur Bestimmung der aktuellen Position und eine Kommunikationseinheit zur drahtlosen Datenübertragung aufweist. Das Endgerät ist dazu eingerichtet, in Kommunikation mit einer Abrechnungszentrale eine Parkgebühr für einen Stellplatz zu entrichten.

Die Auswertungseinrichtung steht in Kommunikationsverbindung mit der Abrechnungszentrale und ist dazu eingerichtet, anhand der Position des Endgerätes und des Zeitpunktes und der Höhe der Parkgebührenentrichtung eine Stellplatzbelegung für das Parkareal zu ermitteln. Hierdurch kann die Qualität der ermittelten Stellplatzbelegung verbessert und dadurch der Parksuchverkehr vermindert werden.

Weiter beschreibt die DE 10 2016 013 804 A1 ein Verfahren zum Betreiben eines Parkleitsystems mit mehreren teilnehmenden Fahrzeugen und zugehörigen Fahrzeugführern. Dabei wird bei einem auf einem Parkplatz parkenden Fahrzeug anhand eines Verhaltens des zugehörigen Fahrzeugführers ein zu erwartender Zeitpunkt der Freigabe des Parkplatzes bestimmt und einem anderen Fahrzeugführer bzw. dessen Fahrzeug mitgeteilt.

Vorhersagen über eine künftige Freigabe von mit einem Fahrzeug belegter Parkplätze werden getroffen und anderen Fahrzeugführern bzw. deren Fahrzeugen mitgeteilt, sodass diese den künftig frei werdenden Parkplatz zum Parken verwenden können. Hierdurch wird insbesondere Situationen entgegengewirkt, bei denen ein frei werdender Parkplatz bei der Parkplatzsuche mittels eines zugehörigen Parkleitsystems nicht berücksichtigt wird. Das führt zu einer verkürzten Suchdauer von Parkplätzen und dementsprechend zu einem erhöhten Komfort für den Fahrzeugführer. Zudem wird das Verkehrsaufkommen reduziert, da bei der Parkplatzsuche kürzere Strecken zurückzulegen sind. Darüber hinaus kommt es hierdurch zu einer höheren Auslastung der Parkplätze bzw. von Parkhäusern.

Schließlich offenbart die DE 10 2009 054 292 A1 ein Verfahren zum Suchen und Ansteuern eines Parkplatzes für ein Fahrzeug mit einem Gerät zum Senden einer Parkplatzanforderung und/oder einer Parkplatzfreigabe an ein Parkleitsystem und zum Empfangen einer Parkplatzinformation durch das Parkleitsystem, wobei das Parkleitsystem die Parkplatzbelegung eines Gebietes verwaltet, wobei die Parkplatzanforderung die aktuelle Position des Fahrzeugs und den Zielort umfasst, wobei die Parkplatzfreigabe die Position des Parkplatzes umfasst, und wobei die Parkplatzinformation die Position eines Zielparkplatzes umfasst. Dadurch werden die Zeit zur Parkplatzsuche und der Fahrweg zum Parkplatz reduziert. Dies führt zu einer entspannten Parkplatzsuche für den Fahrer und reduziert den Schadstoffausstoß des Fahrzeugs (z. B. PKWs). Weiterhin kann das Verfahren ohne zusätzliche größere Infrastruktur durchgeführt werden. So kann z. B. auf Sensoren verzichtet werden, die eine Parkplatzbelegung erkennen. Das Verfahren ermöglicht ein kollaboratives Parkleitsystem, mit dem sich Autos (z. B. PKWs) Parkplätze gegenseitig freigeben. Mithilfe in den Autos vorhandener Lokalisationsgeräte, die zu einem zentralen Parkleitsystem z. B. über das Internet verbunden sind, informieren die Teilnehmer, wo sie einen Parkplatz suchen bzw., dass sie den Parkplatz verlassen haben.

Selbst wenn bei Parkleitsystemen komfortablere Mobilfunk-Anwendungen eingesetzt werden, um Lage- und Belegungsinformationen von Parkhäusern oder Parkflächen anzuzeigen, kann das Verhalten mehrerer Verkehrsteilnehmer die Verkehrssituation nachteilig beeinflussen. So kann ein Schwingungszustand dadurch entstehen, dass viele Verkehrsteilnehmer gleichzeitig dieselben verfügbaren Parkplätze ansteuern, was zu einer Verkehrsverstopfung, zumindest aber zu einer Störung des Verkehrsflusses führen kann. Ebenso kann eine Vollbelegungsanzeige eines Parkhauses dazu führen, dass dieses sogar länger nicht mehr angesteuert wird, als es bereits wieder aufnahmefähig ist.

Der Erfindung stellt sich daher die Aufgabe, durch ein individuelles Verhalten zahlreicher Verkehrsteilnehmer, das durch eine Information über eine momentane Verkehrslage beeinflusst wird, hervorgerufene Schwingungszustände des Verkehrsgeschehens bzw. Resonanzeffekte des Verkehrsflusses weitestgehend zu vermeiden.

Die Aufgabe wird in Verbindung mit den im Oberbegriff des Anspruchs 1 und des Anspruchs 13 angegebenen Merkmalen mit den kennzeichnenden Merkmalen derselben Ansprüche gelöst.

Dazu sieht die Erfindung in einem ersten Aspekt ein Verfahren zur Zuweisung eines Parkplatzes für ein Fahrzeug und zur Navigation des Fahrzeugs zu dem Parkplatz vor, bei welchem Verfahren auf eine an ein Parkleitsystem gesendete Anforderung wenigstens eines Fahrzeugführers für einen Parkplatz für sein Fahrzeug zum Erreichen eines Zielortes, welche Anforderung die Positionsdaten des Fahrzeuges umfasst, eine entsprechende Auswahl eines verfügbaren Parkplatzes durchgeführt wird und dem wenigstens einen Fahrzeugführer der verfügbare Parkplatz vorgeschlagen wird, mithilfe eines dem Parkleitsystem zugeordneten Navigationssystems ermittelte Streckenführung von dem Standort des Fahrzeugs zum Zeitpunkt der Parkplatzanforderung bis zu dem verfügbaren Parkplatz bestimmt wird und der wenigstens eine Fahrzeugführer entlang der bestimmten Streckenführung zu dem verfügbaren Parkplatz navigiert wird. Das Verfahren zeichnet sich dadurch aus, dass die Parkplatzauswahl und die Streckenführung zueinander rückgekoppelt erfolgen. Die Parkplatzauswahl und die Streckenführung stehen in einer wechselseitigen Beziehung, d. h. erfolgen wechselseitig voneinander abhängig.

Weiter sieht die Erfindung dazu in einem zweiten Aspekt ein Parkleitsystem zur Zuweisung eines Parkplatzes für ein Fahrzeug und zur Navigation des Fahrzeugs zu dem Parkplatz, insbesondere zur Ausführung des Verfahrens gemäß dem ersten Aspekt vor, mit einer Erfassungseinheit zur Erfassung eines Belegungszustands eines Parkplatzes oder Stellplatzes und/oder einer mehrere Parkplätze enthaltenden Parkfläche, mit wenigstens einem mobilen Endgerät, mit dem eine Anforderung wenigstens eines Fahrzeugführers für einen Parkplatz bzw. Stellplatz für sein Fahrzeug zum Erreichen eines Zielortes an das Parkleitsystem übermittelbar ist, welche Anforderung momentane Positionsdaten des Fahrzeugs umfasst. Dabei ist das Parkleitsystem zu einer der Anforderung entsprechenden Auswahl eines verfügbaren Parkplatzes und zum Übermitteln eines Auswahlvorschlags eines Parkplatzes an das mobile Endgerät ausgebildet und umfasst ein Navigationssystem, das zur Ermittlung einer Streckenführung von dem Standort des Fahrzeugs zum Zeitpunkt der Parkplatzanforderung bis zu dem verfügbaren Parkplatz ausgebildet ist. Das Parkleitsystem zeichnet sich dadurch aus, dass es zu einer mit der Streckenführung rückgekoppelten Parkplatzauswahl ausgebildet ist oder dass die Parkplatzauswahl und die Streckenführung zueinander in einer wechselseitigen Beziehung stehen, d. h. wechselseitig voneinander abhängig erfolgen.

Erfindungsgemäß wird eine Parkplatzauswahl nicht unabhängig von einer Streckenführung dahin getroffen. Daten zur Parkplatzwahl und Streckenführung hinsichtlich einer Parkplatzbelegung und Verkehrsauslastung einer Route gemäß der Streckenführung des Fahrzeugs werden zueinander rückgekoppelt bzw. wechselseitig aneinander angepasst. Während der Streckenführung des Fahrzeugs zu dem vorgeschlagenen Parkplatz wird die Parkplatzauswahl in Abhängigkeit von der Verkehrsauslastung der Route gemäß der Streckenführung überprüft und im Fall einer nicht akzeptablen, starken Verkehrsauslastung geändert. Ebenso wird die Streckenführung des Fahrzeugs geändert, wenn der zunächst vorgeschlagene oder ausgewählte Parkplatz bereits vollständig belegt ist oder zu dem berechneten Ankunftszeitpunkt des Fahrzeugs dort ausgebucht ist oder belegt sein wird, um einen anderen verfügbaren Parkplatz anzusteuern. Die Parkplatzauswahl und die Streckenführung können erfindungsgemäß iterativ voneinander abhängig geändert werden. Mit dem Verfahren bzw. dem Parkleitsystem wird zumindest ein Verkehrsteilnehmer, vorzugsweise werden mehrere Verkehrsteilnehmer geleitet. Bevorzugt wird eine Vielzahl von Verkehrsteilnehmern in einer zentralen und gemeinschaftlichen oder gemeinsamen Art und Weise geleitet.

Im Rahmen der Erfindung wird die Parkplatzauswahl anhand der tatsächlichen Verkehrslage auf der von dem Parkleitsystem vorgeschlagenen Streckenführung zu dem Parkplatz hinsichtlich Verfügbarkeit und zeitkonformer Erreichbarkeit überprüft. Bei einer negativen Änderung der Verkehrslage, welche eine Erreichbarkeit des Zielorts zu der gewünschten Zeit durch den Fahrzeugführer nicht sicherzustellen vermag, kann die Streckenführung angepasst bzw. geändert werden und/oder ein anderer Parkplatz, welcher die zeitkonforme Erreichbarkeit des Zielortes sicherstellt, gewählt und dem Fahrzeugführer vorgeschlagen werden. Des Weiteren wird bei einer nicht vorhersehbaren Belegung des dem Fahrzeugführer zugewiesenen Parkplatzes, zu dem dieser erfindungsgemäß navigiert wird, vorzugsweise ein anderer, zu der angeforderten Zeit verfügbarer Parkplatz ausgewählt und dem Fahrzeugführer zugewiesen sowie dieser zu diesem anderen Parkplatz über das Navigationssystem des Parkleitsystems geführt.

Die Erfindung bringt den Vorteil mit sich, dass ein hinsichtlich der Parkplatzauslastung bzw. Parkplatzbelegung und der Streckenauslastung optimierter Gesamtverkehrszustand weitestgehend erreicht wird.

Weitere Vorteile ergeben sich aus den Unteransprüchen.

In einer Ausführung des erfindungsgemäßen Verfahrens bzw. bei einer Ausführungsform des erfindungsgemäßen Parkleitsystems beginnt die Navigation zu einem ausgewählten ersten Parkplatz (PP1), der vorteilhaft ist, um ein Ziel rechtzeitig zu erreichen, mit einer ersten Fahrtroute (FR1). Wenn sich die Belegung des ersten Parkplatzes (PP1) ändert, d. h. erhöht, kann es notwendig werden, einen neuen zweiten Parkplatz (PP2) zu wählen, wodurch sich auch die Fahrtroute zu einer neuen Fahrtroute (FR2) ändert. Kommt es auf der ersten Fahrroute (FR1) oder zum Beispiel auf der neuen zweiten Fahrroute (FR2) zu einem Stau, muss die neue zweite Fahrtroute (FR2) in eine dritte Fahrtroute (FR3) geändert werden. Stellt sich heraus, dass es entweder nicht günstig ist, das Fahrzeug über die neue dritte Fahrtroute (FR3) zum zweiten Parkplatz (PR2) zu leiten, oder dass es sogar unmöglich ist, den zweiten Parkplatz (PP2) anzufahren, sucht das Parkleitsystem nach einem weiteren neuen dritten Parkplatz (PP3) und leitet das Fahrzeug zu dem dritten Parkplatz (PP3). Liegt ein weiterer vierter Parkplatz (PP4) entlang der neu gewählten dritten Fahrtroute (FR3), kann dieser anstelle des zweiten Parkplatzes (PP2) angefahren werden. Dementsprechend werden Fahrtroute und Parkplatz in Abhängigkeit voneinander ausgewählt. Dementsprechend können Fahrtroute und Parkplatz über eine Rückkopplungsfunktion in Abhängigkeit voneinander ausgewählt werden.

Bei einer Ausführung des erfindungsgemäßen Verfahrens bzw. bei einer Ausführungsform des erfindungsgemäßen Parkleitsystems erfassen Sensoren einen Belegungszustand eines Parkplatzes und/oder einer mindestens einen Parkplatz enthaltenden Parkfläche. Dabei kann die Parkplatzbelegung über Zählsysteme, die auf einer Ausfahrt-Einfahrt-Differenzmessung oder auf Ultraschall-, Radar- oder Lasermessungen beruhen, bestimmt werden. Ebenso können optische Kameras, Satelliten oder eine Radio-Frequency Identification (RFID)-Technologie (Identifizierung mithilfe von elektromagnetischen Wellen) zur Belegungsmessung von Parkplätzen bzw. Parkflächen eingesetzt werden.

Im Rahmen der Erfindung können aber auch Schätzungen benutzt werden, wie viele Parkplätze auf einer Parkfläche, deren Größe zumindest in etwa bekannt ist, zur Verfügung stehen. Dabei wird von einer Länge von vorzugsweise 6 m und üblicher Breite eines für ein Fahrzeug benötigten Parkplatzes ausgegangen.

Bei einer bevorzugten Ausführung des erfindungsgemäßen Verfahrens bzw. einer bevorzugten Ausführungsform des erfindungsgemäßen Parkleitsystems werden Parkplatzauswahl und Routenführung aktualisiert und entsprechend aneinander angepasst. Vorzugsweise werden die Parkplatzauswahl und die Routenführung nach einer Aktualisierung wechselseitig aneinander angepasst. Die Aktualisierung und/oder die Anpassung können/kann fortlaufend oder in vorgebbaren Zeitabständen erfolgen.

Bei dem erfindungsgemäßen Verfahren bzw. Parkleitsystem kann mit der Anforderung eines Parkplatzes eine Ankunftszeit am Zielort vorgegeben werden. Das Navigationssystem bestimmt dann während der Streckenführung des Fahrzeugs eine voraussichtliche Ankunftszeit an dem verfügbaren Parkplatz und überprüft während der Streckenführung des Fahrzeugs zu dem ausgewählten Parkplatz dessen Verfügbarkeit zu der voraussichtlichen Ankunftszeit. Bei einem Überschreiten der vorgegebenen Ankunftszeit am Zielort durch die voraussichtliche Ankunftszeit am Zielort wird die Streckenführung durch das Navigationssystem entsprechend geändert und/oder wird ein anderer zu der voraussichtlichen Ankunftszeit verfügbarer Parkplatz gewählt und das Fahrzeug zu dem anderen verfügbaren Parkplatz navigiert.

Bei einer anderen Ausführung des erfindungsgemäßen Verfahrens bzw. bei einer anderen Ausführungsform des erfindungsgemäßen Parkleitsystems wird mit der Anforderung eines Parkplatzes eine Ankunftszeit am Zielort vorgegeben und von dem Navigationssystem während der Streckenführung des Fahrzeugs eine voraussichtliche Ankunftszeit an dem verfügbaren Parkplatz bestimmt. Die Verfügbarkeit des ausgewählten Parkplatzes zum Zeitpunkt der voraussichtlichen Ankunftszeit an diesem wird überprüft und im Falle einer nicht bestehenden Verfügbarkeit wird von dem Verkehrsleitsystem ein anderer Parkplatz ausgewählt, eine voraussichtliche Ankunftszeit an diesem bestimmt und eine Verfügbarkeit des anderen Parkplatzes zu der voraussichtlichen Ankunftszeit überprüft. Im Falle von dessen Verfügbarkeit wird das Fahrzeug zu dem anderen Parkplatz navigiert und im Falle einer Nicht-Verfügbarkeit des anderen Parkplatzes wird eine Auswahl eines weiteren Parkplatzes solange durchgeführt, bis ein zu dem entsprechenden Zeitpunkt verfügbarer Parkplatz ermittelt wird.

Eine noch andere Ausführung des erfindungsgemäßen Verfahrens bzw. Ausführungsform des erfindungsgemäßen Parkleitsystems zeichnet sich dadurch aus, dass bei der Parkplatzwahl und/oder Streckenführung andere über das Parkleitsystem beeinflussbare und/oder davon unabhängige Verkehrsteilnehmer berücksichtigt werden. Dabei kann das Verhalten der von dem Parkleitsystem beeinflussbaren Verkehrsteilnehmer benutzt werden, um das Verhalten der von dem Parkleitsystem unabhängigen Verkehrsteilnehmer abzuschätzen bzw. dieses hochzurechnen.

Bei einer wiederum weiteren Ausführung des erfindungsgemäßen Verfahrens bzw. Ausführungsform des erfindungsgemäßen Parkleitsystems wird die Parkplatzauswahl und/oder die Streckenführung unter Berücksichtigung eines geschätzten oder prognostizierten Verhaltens einer Vielzahl von Verkehrsteilnehmern durchgeführt. Dabei kann das geschätzte, geplante, vorhergesagte oder prognostizierte Verhalten einer Mehrzahl von Verkehrsteilnehmern berücksichtigt werden. Die Schätzung oder Prognose kann aufgrund von statistischen Daten oder sonst wie gewonnenen Verkehrsdaten erstellt werden. Die Vielzahl oder Mehrzahl von Verkehrsteilnehmern kann dabei nicht mit einem Parkleitsystem geleitete Verkehrsteilnehmer umfassen.

Im Rahmen der Erfindung wird vom Parkleitsystem eine Parkplatzauslastung der Parkflächen anhand von Positionen der geführten Fahrzeuge und deren örtlichen und zeitlichen Parkplatzanforderungen rechnerisch ermittelt bzw. prognostiziert. Vorzugsweise wird auch das Verhalten von solchen Fahrzeugen, die vom Parkleitsystem unabhängig sind, berücksichtigt. Das Verhalten der nicht-geführten Fahrzeuge kann aufgrund statisch ermittelter Daten bestimmt oder aufgrund historischen Verkehrsverhaltens vorhergesagt werden. Die Berücksichtigung der vom Parkleitsystem unabhängigen Fahrzeuge bzw. Verkehrsteilnehmer kann durch eine Anpassung oder Neuberechnung der Parkplatzanforderungen unter Einbeziehung der Verkehrsauslastung auf zur Erreichung der Parkflächen vorgeschlagenen Strecken geschehen.

Vorzugsweise werden bei der Parkplatzauswahl und Streckenführung zu dem ausgewählten Parkplatz zusätzliche Informationen von dem Parkleitsystem berücksichtigt, die eine Wetterlage, einen Veranstaltungskalender, Feiertage, nach Wochentag oder Uhrzeit statistisch ermittelte Verkehrslagen und/oder sonstige Ereignisse umfassen.

Bei einer weiteren bevorzugten Ausführung des erfindungsgemäßen Verfahrens bzw. weiteren bevorzugten Ausführungsform des erfindungsgemäßen Parkleitsystems wird das Verhalten anderer, nicht mit dem erfindungsgemäßen Parkleitsystem oder Verfahren geführten Verkehrsteilnehmern berücksichtigt. Dabei wird auf das Verhalten dieser Verkehrsteilnehmer u. a. anhand von Bewegungsprofilen von Smartphones geschlossen. Ebenso können statistische Modelle, die auf einem Einkaufs-, Parkverhalten, einer Höhe von entrichteten Parkgebühren und dgl. basieren, eingesetzt werden, um das Verkehrsverhalten der nicht mit dem erfindungsgemäßen Parkleitsystem oder Verfahren geführten Verkehrsteilnehmer berücksichtigen zu können. Bei einer Anpassung von statistischen Modellen bzw. Statistiken zur Anwendung bei dem erfindungsgemäßen Verfahren bzw. Parkleitsystem können auf künstlicher Intelligenz (KI) basierende Systeme eingesetzt werden.

Eine weitere Ausführung des erfindungsgemäßen Verfahrens bzw. einer weitere Ausführungsform des erfindungsgemäßen Parkleitsystems zeichnet sich dadurch aus, dass bei einer Zuweisung eines Parkplatzes und einer Streckenführung dorthin für mehrere Fahrzeuge während der Streckenführung zu dem jeweils ausgewählten Parkplatz eine verbleibende Fahrzeit ermittelt wird und bei negativen Änderungen der Verkehrslage und/oder einer sich ändernden Parkplatzverfügbarkeit die Streckenführung und/oder Parkplatzauswahl geändert wird.

Bei negativen Änderungen der Verkehrslage und/oder einer sich ändernden Parkplatzverfügbarkeit wird die Streckenführung und/oder Parkplatzauswahl vorzugsweise für diejenigen Fahrzeuge, die eine im Vergleich zu mindestens einem der weiteren Fahrzeuge verbleibende längere Fahrzeit haben, geändert.

Bevorzugt wird ein zusätzlicher Fahrzeugführer, der mit seinem Fahrzeug einen Parkplatz belegt, der für das wenigstens eine Fahrzeug ausgewählt ist und zu dem das wenigstens eine Fahrzeug navigiert wird, von dem Parkleitsystem zur Ansteuerung eines zusätzlichen Parkplatzes aufgefordert und zu diesem navigiert werden, um den Parkplatz zu einer der angeforderten Ankunftszeit am Zielort entsprechenden Zeit freizumachen. Im Rahmen der Erfindung können Anforderungen bzw. Reservierungen von Parkplätzen auf verschiedenen Parkflächen in Abhängigkeit von dem prognostizierten Platzbedarf, der Parkplatzauslastung und der prognostizierten und/oder ermittelten tatsächlichen Verkehrsauslastung der vom Parkleitsystem vorgeschlagenen Strecken der Fahrzeuge von ihren jeweiligen Standorten zu den angewiesenen Parkflächen gegeneinander ausgetauscht werden. Somit stellt die Erfindung ein interaktives System von Parkplatzauswahl und Streckenführung bereit.

Bei einer bevorzugten Ausführung des erfindungsgemäßen Verfahrens bzw. einer bevorzugten Ausführungsform des erfindungsgemäßen Parkleitsystems werden bei einer Auswahl von Parkplätzen und einer Streckenführung dahin für eine Vielzahl von Fahrzeugen bzw. Verkehrsteilnehmern, welche dasselbe Ziel ansteuern, diejenigen, die frühzeitig zu Parkplätzen nahe des Ziels gelangen, zu Parkplätzen geführt, die weiter von dem Zielort entfernt sind, als solche Parkplätze, die für die später zu den Parkplätzen nahe des Zielorts gelangenden Fahrzeuge vorbehalten sind. Insbesondere im Fall einer Großveranstaltung ergeben sich dadurch Vorteile in Form einer räumlichen Entzerrung des Abreiseverkehrs nach Ende der Großveranstaltung. Denn idR verlassen die zuletzt eingetroffenen Besucher von Veranstaltungen diese zuerst, sodass sie noch vor den zuerst eingetroffenen Besuchern Parkplätze bzw. Parkflächen mit ihren Fahrzeugen verlassen haben werden.

Die Erfindung wird nachfolgend anhand von Ausführungsbeispielen im Zusammenhang mit begleitenden, teilweise stark vereinfachten und in unterschiedlichen Maßstäben gehaltenen Zeichnungen näher erläutert. Von den Figuren, in denen gleiche Teile mit gleichen Bezugszeichen gekennzeichnet sind, zeigen:
- Fig. 1(a - d): ein Parkplatzbelegungsszenario gemäß einer ersten Ausführungsform der Erfindung,
- Fig. 2(a-d): ein Parkplatzbelegungsszenario gemäß einer zweiten Ausführungsform der Erfindung,
- Fig. 3: ein Parkplatzbelegungsszenario gemäß einer dritten Ausführungsform der Erfindung,
- Fig. 4: eine Veranschaulichung einer vierten Ausführung des erfindungsgemäßen Verfahrens bzw. Parkleitsystems,
- Fig. 5: eine Veranschaulichung einer fünften Ausführung des erfindungsgemäßen Verfahrens bzw. Parkleitsystems,
- Fig. 6(a-c): ein im Rahmen der Erfindung einsetzbares Belegungszeitdiagramm eines Parkplatzes und
- Fig. 7: eine vereinfachte Funktions-Darstellung des Parkleitsystems.

Anhand der nachfolgenden Figuren wird das erfindungsgemäße Verfahren zum Zuweisen eines Parkplatzes für ein Fahrzeug und ein entsprechendes Leiten des Fahrzeuges zu dem Parkplatz sowie ein Einsatz bzw. eine Wirkungsweise des erfindungsgemäßen Parkleitsystems anhand von beispielhaften Verkehrssituationen schematisch erläutert.

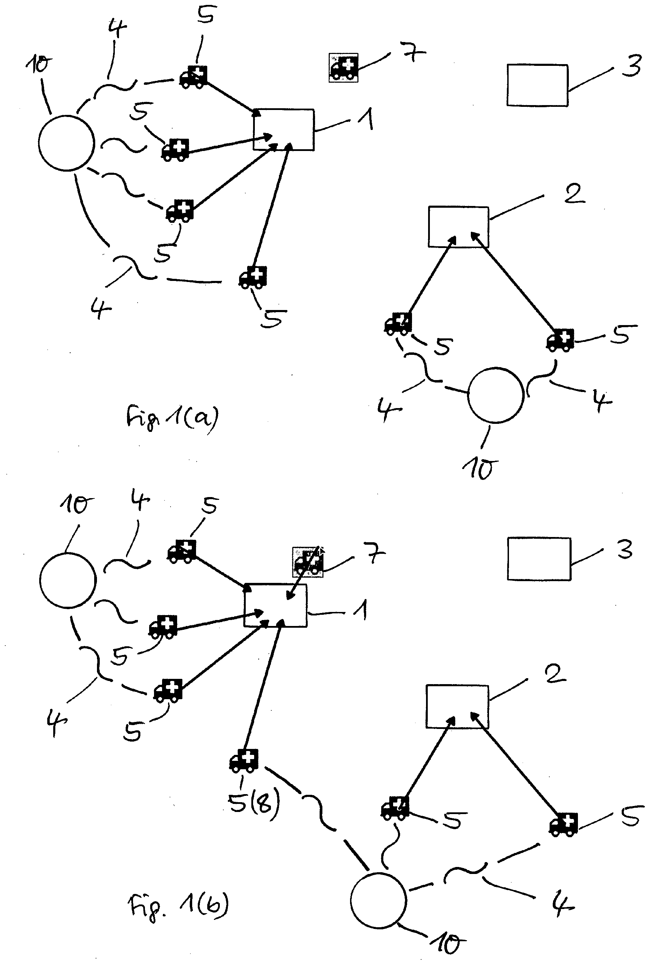

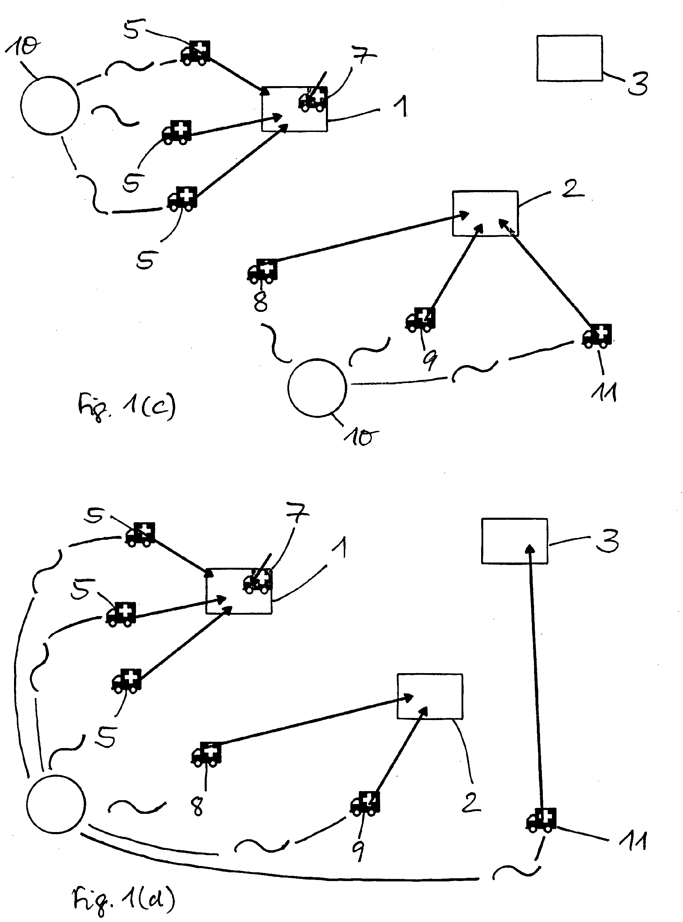

Nach Fig. 1(a) wird davon ausgegangen, dass in einer Vielzahl von Fahrzeugen, für die in einem Verkehrsgebiet mehrere Parkflächen 1, 2, 3 vorhanden sind, von denen eine Mehrzahl von Fahrzeugen mithilfe von mobilen Endgeräten wie Smartphones oder Navigationsgeräten über eine schematisch angedeutete Funkverbindung 4 mit dem Parkleitsystem 10, insbesondere dessen Navigationssystem (nicht gezeigt), verbunden sind. Neben den an das Parkleitsystem 10 angeschlossenen Fahrzeugen 5 sind auf den Verkehrswegen auch Fahrzeuge ohne Verbindung zu dem Parkleitsystem 10, wie durch das Fahrzeug 7 veranschaulicht, unterwegs. In Fig. 1 sind die Entfernungen und Standorte durch die Position der Autosymbole 5, 7 veranschaulicht. Die Länge der Pfeile deutet die Entfernung der Fahrzeuge von den Parkflächen 1, 2 an, aus der diese mithilfe des Parkleitsystems 10 zu einem für sie verfügbaren individuellen Parkplatz auf den Parkflächen 1, 2, 3 geführt werden.

Wie in Fig. 1(b) angedeutet ist, muss dabei berücksichtigt werden, dass das nicht mit dem Parkleitsystem 10 verbundene Fahrzeug 7 den Parkplatz 1 ansteuert und wie in der Fig. 1(c) dargestellt ist, als erstes Fahrzeug dort einen Parkplatz bzw. Stellplatz findet. Die Parkfläche 1 sei nur für vier Fahrzeuge ausgelegt, sodass eines der an das Parkleitsystem 10 angeschlossenen Fahrzeuge 5 von diesem auf die Parkfläche 2 umgeleitet werden muss, um einen Parkplatz erhalten zu können. Dabei wird dasjenige Fahrzeug 8 (5) von der Route zur Parkfläche 1 auf eine Route zur Parkfläche 2 umgeleitet, welches die größte Entfernung zu der Parkfläche 1 aufweist. Denn entsprechend besteht aufgrund der räumlichen Entfernung ausreichend Zeit, um nach anderen Parkflächen Ausschau zu halten, ohne dass es einer wesentlichen Richtungsumkehr für das Fahrzeug 8 bedarf. Eine Umleitung der näher zu der Parkfläche 1 befindlichen Fahrzeuge 5 zu der Parkfläche 2 hätte zu einer Erhöhung der Verkehrsflussdichte in deren Bereich geführt und damit zu einer Verschlechterung der Verkehrssituation der Fahrzeuge 5 insgesamt. Wie bereits erwähnt, wird das Verfahren und das Parkleitsystem 10 der vorliegenden Erfindung verwendet, um zumindest einen Verkehrsteilnehmer und Fahrzeug, mehrere Verkehrsteilnehmer und Fahrzeuge oder sogar eine große Anzahl von Verkehrsteilnehmern und Fahrzeugen zu leiten, z. B. in einer zentralisierten und gemeinschaftlichen Weise, indem optimale Lösungen (z.B. Parkplatzbelegung und Routenführung) für die Anzahl von Verkehrsteilnehmern und Fahrzeugen als Ganzes gefunden werden.

Sofern wie in Fig. 1 (d) angedeutet die Parkfläche 2 zur Aufnahme von zwei Fahrzeugen ausgebildet ist, muss bei der in der Fig. 1(c) gezeigten Verkehrssituation um die Parkfläche 2 ebenfalls eines der dortigen Fahrzeuge 8, 9, 11 auf eine andere Parkfläche umgeleitet werden. Dabei wird nach Fig. 1(d) das der Parkfläche 2 nächstliegende Fahrzeug 9 und das bereits umgeleitete Fahrzeug 8 der Parkfläche 2 zugewiesen. Das Fahrzeug 11 wird durch das Parkleitsystem 10 auf die Parkfläche 3 verwiesen und mit dem in dem Parkleitsystem 10 integrierten Navigationssystem mithilfe einer vorgegebenen Route dorthin geleitet. In diesem Fall ist mit dem Fahrzeug 11 nicht das am weitesten von der Parkfläche 2 entfernte Fahrzeug umgeleitet worden sondern das der Parkfläche 3 am meisten zugewandte Fahrzeug.

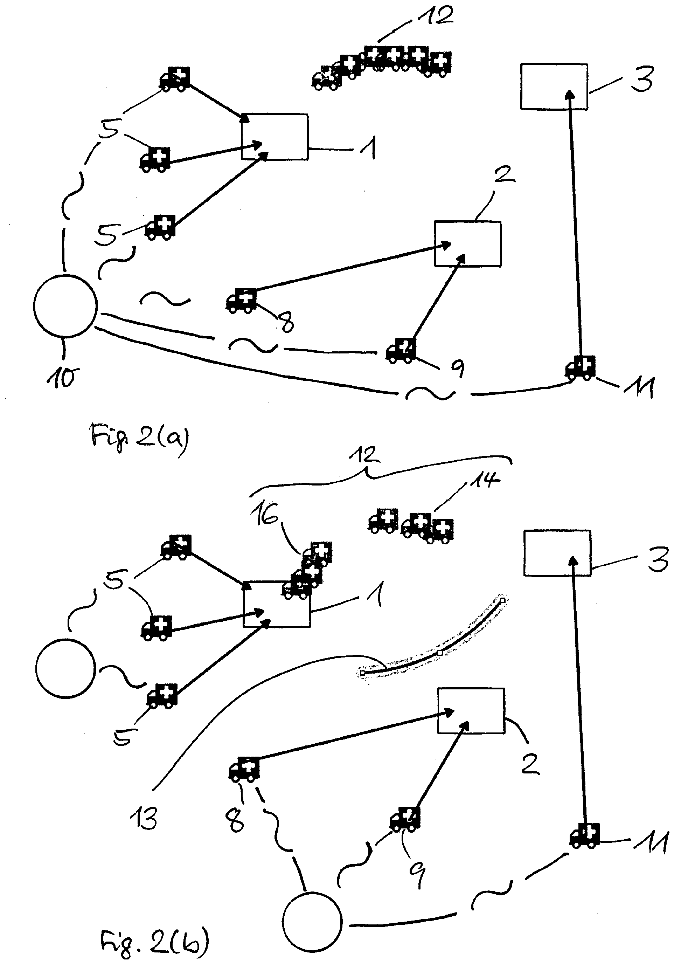

Wie anhand der Fig. 2(a) gezeigt kann das Verhalten von nicht verkehrsgeleiteten Fahrzeugteilnehmern bzw. Fahrzeugen 12 unterschiedlich sein. So kann eine Teilgruppe 14 der Fahrzeuge 12 an ihrem Standort verharren - Fig. 2(b), während gleichzeitig eine Teilgruppe 16 von Fahrzeugen die Parkfläche 1 ansteuert. Dabei ist es erfindungsgemäß vorgesehen, nicht nur auf spontane Verhaltensweisen nicht-gesteuerter Fahrzeuge 16 zu reagieren, sondern bereits im Vorfeld wie in Fig. 2(b) angedeutet, eine Belegungs- bzw. Auslastungsprognose 13 durch das Parkleitsystem 10 zu erstellen. Die Belegungs- bzw. Auslastungsprognose 13 gibt die Belegung der Parkfläche 1 gegenüber der Zeit an. Dabei wird vorausberechnet, mit welcher Wahrscheinlichkeit die zunächst stationär verbliebenen Fahrzeuge 14 die Parkfläche 1 ansteuern werden.

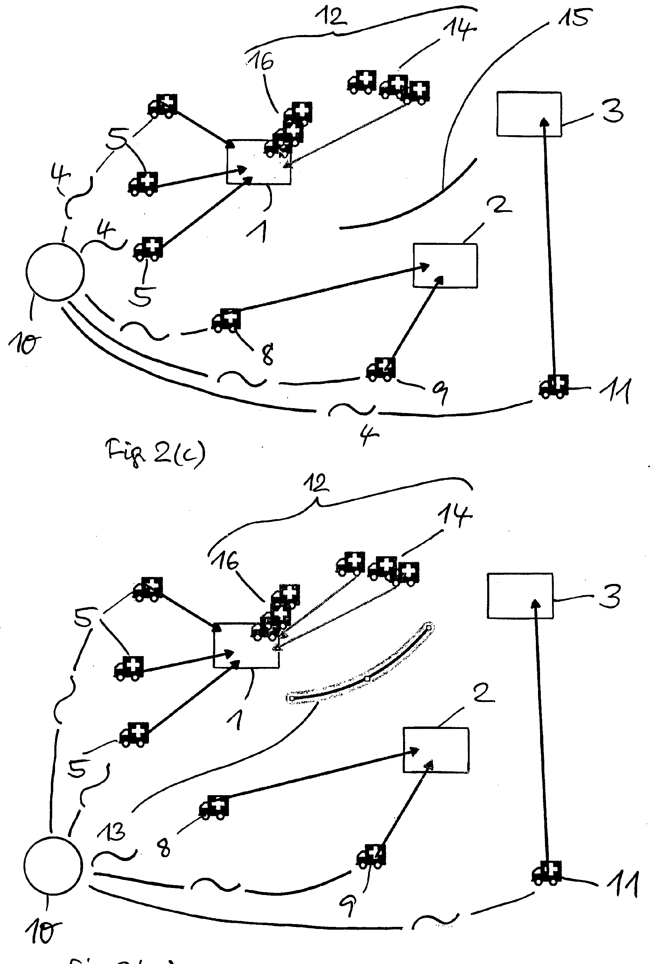

Daneben wird wie in Fig. 2(c) schematisch angedeutet eine Belegungs- bzw. Auslastungskurve 15, d. h. eine Belegungszahl B gegenüber der Zeit t, der Parkfläche 1 ermittelt. Dies kann für weitere Verkehrsleitungsprozesse benutzt werden. Wenn die Belegungs- oder Auslastungskurve 15 anzeigt, dass sich ein Parkplatz seiner maximalen Kapazität nähert, kann das Parkleitsystem 10 in einer Ausführungsform eine Neubewertung und/oder Inspektion der Parkfläche auslösen, um die tatsächliche Belegung zu bestätigen.

Bewegt sich die nicht von dem Parkleitsystem 10 gesteuerte Fahrzeuggruppe 14 wie in Fig. 2(d) dargestellt auf die Parkfläche 1 zu, so wird die Belegungs- bzw. Auslastungsprognose 13 der Parkfläche 1 entsprechend angepasst, weil es wahrscheinlich ist, dass ein oder mehrere Fahrzeuge 14 einen Parkplatz auf bzw. in der Parkfläche 1 anstreben.

Das Aufstellen einer solchen Belegungs- bzw. Auslastungsprognose 13 und deren Einbeziehung in die mit dem Parkleitsystem 10 durchgeführte Zuweisung und Hinführung auf eine Parkfläche 1, 2, 3 bzw. einen Parkplatz darauf ist vorteilhaft, um eine entsprechende Umleitung der navigationsgesteuerten Fahrzeuge 5, 8, 9, 11 bewerkstelligen zu können. So ist insbesondere für die in Fig. 2(d) dargestellten Entfernungssituationen der navigationsgesteuerten Fahrzeuge 5, 8, 9, 11 und der nicht-navigationsgesteuerten Fahrzeuge 12, 14, 16 die Berücksichtigung einer Wahrscheinlichkeit des Aufsuchens der Parkfläche 1 durch die Fahrzeuge 14 gegenüber einem spontanen Aufsuchen der Parkfläche 1 durch die Fahrzeuge 14 deshalb vorteilhaft, weil ansonsten ein Anfahren der Parkfläche 1 durch alle Fahrzeuge 5, 14 gleichzeitig erfolgen würde. Dann müsste eine Umleitung der Fahrzeuge 5, 14 unter einer erhöhten lokalen Verkehrsdichte mit entsprechenden Nachteilen durchgeführt werden.

In den anhand der Fign. 2(a - d) dargestellten Verkehrssituationen mit einer Belegungs- bzw. Auslastungsprognose 13 der Parkfläche 1 für ein Verhalten von nicht mit dem Verkehrsleitsystem verbundenen Fahrzeugen 12, 14, 16 kann diese dadurch im Rahmen der Erfindung verbessert werden, dass sie auf zusätzlichen Informationen basierend berechnet wird. So kann etwa eine gemessene tageszeitabhängige Belegungsstatistik der Prognose zu Grunde gelegt werden. Es kann aber auch ein Veranstaltungskalender mit Veranstaltungen wie Sportveranstaltungen, insbesondere Fußballspielen, Musikveranstaltungen, Konzert-, Theater- oder Oper-Aufführungen Berücksichtigung finden. Dadurch können bekannte Muster der Fahrzeugbewegung auf einfache Weise erfasst werden und diese entsprechend in die Zuweisung eines Parkplatzes an mit dem Verkehrsleitsystem kommunizierende Fahrzeuge und deren Führung auf die Parkflächen aufgenommen werden.

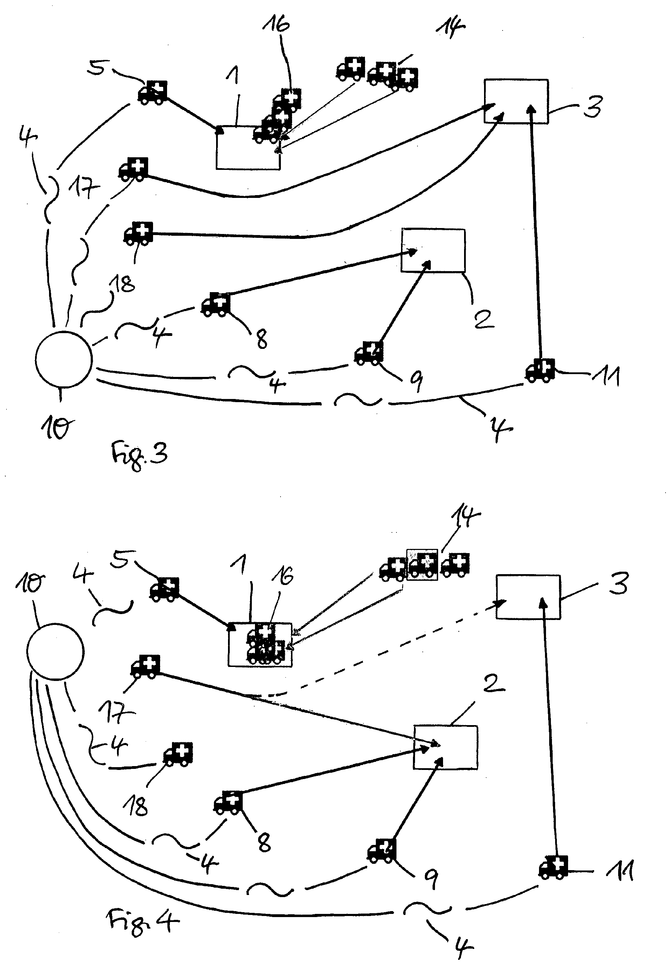

So kann wie beispielhaft anhand der Fig. 3 dargelegt frühzeitig eine Umleitung von Fahrzeugen 17, 18 auf die Parkfläche 3 initiiert werden, wenn bekannt ist, dass aufgrund einer besonderen Veranstaltungssituation die Fahrzeuge 14 mit einer sehr hohen Wahrscheinlichkeit die Parkfläche 1 anfahren werden und dabei nicht mit dem Verkehrsleitsystem verbunden sind.

Ebenso können mit dem erfindungsgemäßen Parkleitsystem 10 bzw. erfindungsgemäßen Verfahren weitere Effekte und Verhaltensmuster von Verkehrsteilnehmern berücksichtigt werden.

So ist einerseits wie in Fig. 4 angedeutet ein Austritt des Fahrzeugs 18 aus der angeforderten Parkplatzzuweisungssituation zu der Parkfläche 3 zu beobachten, in dem das Fahrzeug die entsprechende Route nicht weiter vollzieht und die Parkfläche 3 nicht aufsucht. Ebenso kann einberechnet werden, dass wie durch das Fahrzeug 17 in Fig. 4 angedeutet Fahrzeugführer die ihnen vom Parkleitsystem 10 zugewiesene Parkfläche 3 nicht akzeptieren und durch die Strichelung des Pfeils zur Parkfläche 3 angedeutet die Route zu dieser entsprechend nicht befolgen sondern stattdessen wie hier veranschaulicht auf die Parkfläche 2 zusteuern. Die Parkfläche 2 ist aber bei Eintreffen der Fahrzeuge 8 und 9 bereits vollständig besetzt und das weitere Fahrzeug 17 könnte nicht mehr aufgenommen werden. Solche Effekte können in der Zuweisungs- bzw. Auswahlsituation von Parkplätzen auf den Parkflächen 1, 2, 3 und der entsprechenden Routenführung anhand einer gemessenen Häufigkeit des Nicht-Befolgens von verkehrsleitenden Anweisungen Berücksichtigung finden.

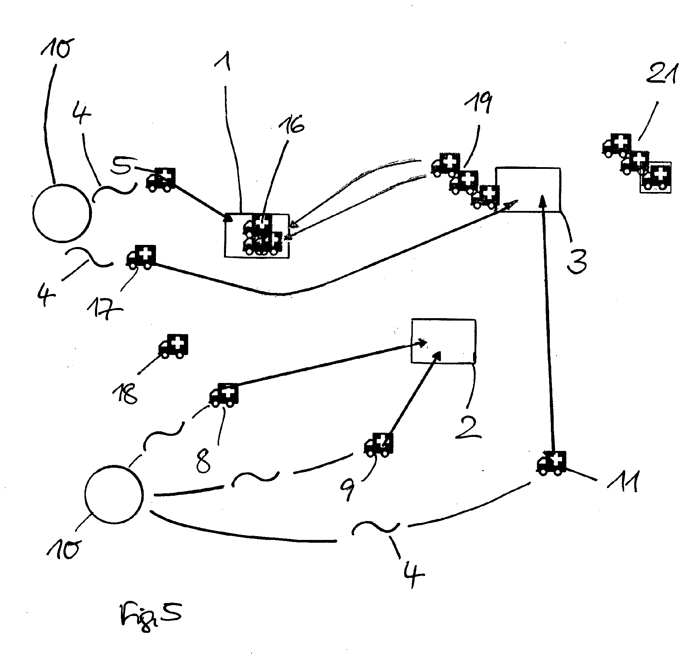

Entsprechende Effekte können auch dadurch auftreten, dass herkömmliche Verkehrsleitschilder nicht auf einem aktuellen Belegungsstand sind und so weitere Fahrzeuge 19 bzw. 21 wie in Fig. 5 veranschaulicht auf die Parkflächen 1 bzw. 3 zufahren, obwohl diese bereits aufgrund von Belegungen mit den Fahrzeugen 16 oder durch eine laufende Navigierung der Fahrzeuge 11, 17 für weitere Fahrzeuge nicht mehr zur Verfügung stehen sollten.

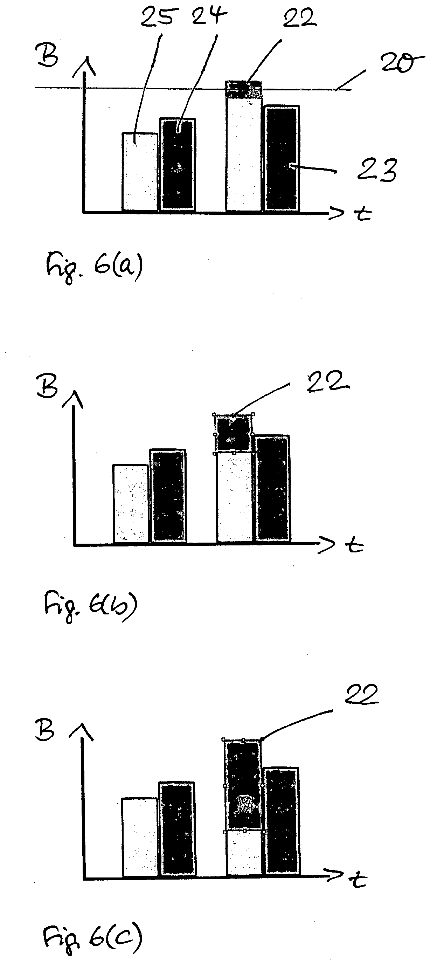

Bei einem Einsatz des erfindungsgemäßen Parkleitsystems 10 bzw. des Park-Zuweisungs- und Navigationsverfahrens kann auf gesammelte Belegungsdaten, die in Form von Belegungs-Zeitdiagrammen, wie in Fig. 6 dargestellt zusammengetragen werden können, zurückgegriffen werden.

Wird nach Fig. 6(a) eine durch die Markierung 20 gegebene Belegungsgrenze durch eine in einer Zeiteinheit Δt zu erwartende Anzahl von Fahrzeugen 22 überschritten werden, so muss ein Teil dieser Fahrzeuggruppe auf andere Parkflächen umgelenkt werden. Entsprechende Reservierungen an anderen Parkflächen müssen dann vorgenommen werden. Selbst wenn man über eine Benutzergruppe 22 keine weiteren Informationen über deren Verkehrsverhalten bzw. Verhalten bezüglich der Verkehrsleitung hat, ist eine geschlossene Parkplatzbelegung mit dieser nur mit einer Umlagerung von Teilnehmern anderer Gruppen 23, 24, 25 erreichbar. Eine entsprechende Verkehrsführung bzw. Verkehrsauslastung ist umso stabiler vorgebbar je größer die anfragende Benutzergruppe 22 ist wie in den Fign. 6(b, c) dargestellt ist.

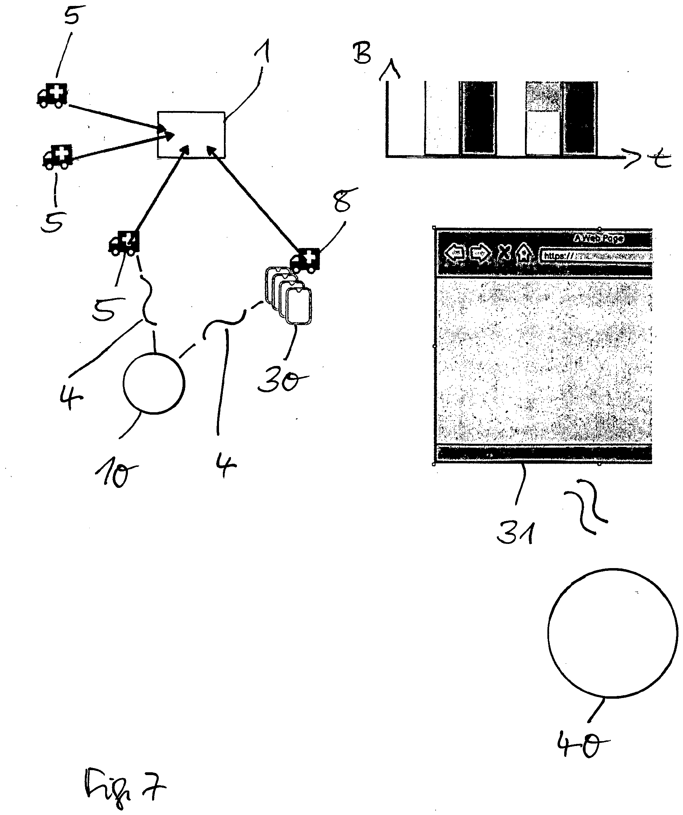

Das Parkleitsystem 10 kann auf Internet- oder Intranet-Servern bereitgestellt werden und über Funkverbindungen oder über entsprechende LAN- oder WLAN-Verbindungen von über diese kommunizierende Endgeräte 30 oder Displays erreicht werden. Eine in Fig. 7 schematisch und softwaremäßig dargestellte zentrale Rechnereinheit 40 verwaltet und errechnet Zuweisungsmodelle für Parkplätze und übernimmt eine entsprechende Navigation der Fahrzeuge 5, 8 auf entsprechend berechneten Fahrtrouten. Dazu läuft eine Applikation, über die eine Steuerung oder Kontrollmechanismen erfolgen/t, beispielsweise in einem Browser in Form von Webpages 31.

## Patentansprüche

1. Verfahren zur Zuweisung eines Parkplatzes für ein Fahrzeug und zur Navigation des Fahrzeugs zu dem Parkplatz,
- bei welchem Verfahren auf eine an ein Parkleitsystem (10; 31) gesendete Anforderung wenigstens eines Fahrzeugführers für einen Parkplatz für sein Fahrzeug (5, 8, 9, 11, 17, 18) zum Erreichen eines Zielortes, welche Anforderung Positionsdaten des Fahrzeuges (5, 8, 9, 11, 17, 18) umfasst, eine entsprechende Auswahl eines verfügbaren Parkplatzes durchgeführt wird und dem wenigstens einen Fahrzeugführer der verfügbare Parkplatz vorgeschlagen wird,
- mithilfe eines dem Parkleitsystem (10, 31) zugeordneten Navigationssystems ermittelte Streckenführung von dem Standort des Fahrzeugs (5, 8, 9, 11, 17, 18) zum Zeitpunkt der Parkplatzanforderung bis zu dem verfügbaren Parkplatz bestimmt wird und
- der Fahrzeugführer entlang der bestimmten Streckenführung zu dem verfügbaren Parkplatz navigiert wird,
**dadurch, gekennzeichnet, dass** die Parkplatzauswahl und die Streckenführung zueinander rückgekoppelt erfolgen.

2. Verfahren nach Anspruch 1, **dadurch gekennzeichnet, dass** die Parkplatzauswahl und die Routenführung aktualisiert und entsprechend aneinander angepasst werden.

3. Verfahren nach Anspruch 1 oder 2, **dadurch gekennzeichnet, dass** Sensoren einen Belegungszustand eines Parkplatzes und/oder einer einen Parkplatz enthaltenden Parkfläche (1, 2, 3) erfassen.

4. Verfahren nach einem der Ansprüche 1 bis 3, **dadurch gekennzeichnet,**
**dass** mit der Anforderung eines Parkplatzes eine Ankunftszeit am Zielort vorgegeben wird, von dem Navigationssystem während der Streckenführung des Fahrzeugs (5, 8, 9, 11, 17, 18) eine voraussichtliche Ankunftszeit an dem verfügbaren Parkplatz bestimmt wird und
**dass** während der Streckenführung des Fahrzeugs (5, 8, 9, 11, 17, 18) zu dem ausgewählten Parkplatz dessen Verfügbarkeit zu der voraussichtlichen Ankunftszeit überprüft wird und bei einem Überschreiten der vorgegebenen Ankunftszeit am Zielort durch die voraussichtliche Ankunftszeit am Zielort die Streckenführung durch das Navigationssystem entsprechend geändert wird und/oder ein anderer, zu der voraussichtlichen Ankunftszeit verfügbarer Parkplatz gewählt wird und das Fahrzeug (5, 8, 9, 11, 17, 18) zu dem anderen verfügbaren Parkplatz navigiert wird.

5. Verfahren nach einem der Ansprüche 1 bis 4 **dadurch gekennzeichnet,**
- **dass** mit der Anforderung eines Parkplatzes eine Ankunftszeit am Zielort vorgegeben wird, von dem Navigationssystem während der Streckenführung des Fahrzeugs (5, 8, 9, 11, 17, 18) eine voraussichtliche Ankunftszeit an dem verfügbaren Parkplatz bestimmt wird,
- **dass** die Verfügbarkeit des ausgewählten Parkplatzes zum Zeitpunkt der voraussichtlichen Ankunftszeit an diesem überprüft wird und im Falle einer nicht bestehenden Verfügbarkeit von dem Verkehrsleitsystem ein anderer Parkplatz ausgewählt wird, eine voraussichtliche Ankunftszeit an diesem bestimmt wird und eine Verfügbarkeit des anderen Parkplatzes zu der voraussichtlichen Ankunftszeit überprüft wird und im Falle von dessen Verfügbarkeit das Fahrzeug (5, 8, 9, 11, 17, 18) zu dem anderen Parkplatz navigiert wird und
- **dass** im Falle einer Nicht-Verfügbarkeit des anderen Parkplatzes eine Auswahl eines weiteren Parkplatzes solange durchgeführt wird, bis ein zu dem entsprechenden Zeitpunkt verfügbarer Parkplatz ermittelt wird.

6. Verfahren nach einem der Ansprüche 1 bis 5, **dadurch gekennzeichnet, dass** bei der Parkplatzwahl und/oder der Streckenführung andere über das Parkleitsystem (10; 31) beeinflussbare und/oder davon unabhängige Verkehrsteilnehmer berücksichtigt werden.

7. Verfahren nach einem der Ansprüche 1 bis 6, **dadurch gekennzeichnet, dass** die Parkplatzauswahl und/oder die Streckenführung unter Berücksichtigung eines geschätzten Verhaltens einer Vielzahl von Verkehrsteilnehmern erfolgt.

8. Verfahren nach einem der Ansprüche 1 bis 7, **dadurch gekennzeichnet, dass** bei der Parkplatzauswahl und Streckenführung zu dem ausgewählten Parkplatz zusätzliche Informationen von dem Parkleitsystem (10; 31) berücksichtigt werden, die eine Wetterlage, einen Veranstaltungskalender, Feiertage, nach Wochentag oder Uhrzeit statistisch ermittelte Verkehrslagen und/oder sonstige Ereignisse umfassen.

9. Verfahren nach einem der Ansprüche 1 bis 8, **dadurch gekennzeichnet, dass** bei einer Zuweisung eines Parkplatzes und einer Streckenführung dorthin für mehrere Fahrzeuge (5, 8, 9, 11, 17, 18) während der Streckenführung zu dem jeweils ausgewählten Parkplatz eine verbleibende Fahrzeit ermittelt wird und bei negativen Änderungen der Verkehrslage und/oder einer sich ändernden Parkplatzverfügbarkeit die Streckenführung und/oder Parkplatzauswahl f geändert wird.

10. Verfahren nach einem der Ansprüche 1 bis 9, **dadurch gekennzeichnet, dass** bei einer Zuweisung eines Parkplatzes und einer Streckenführung dahin für mehrere Fahrzeuge (5, 8, 9, 11, 17, 18) während der Streckenführung zu dem jeweils ausgewählten Parkplatz eine verbleibende Fahrzeit ermittelt wird und bei negativen Änderungen der Verkehrslage und/oder einer sich ändernden Parkplatzverfügbarkeit die Streckenführung und/oder Parkplatzauswahl für diejenigen Fahrzeuge (11, 17, 18), die eine im Vergleich zu mindestens einem der weiteren Fahrzeuge (5, 8, 9) verbleibende längere Fahrzeit haben, geändert wird.

11. Verfahren nach einem der Ansprüche 1 bis 10, **dadurch gekennzeichnet, dass** ein zusätzlicher Fahrzeugführer (23), der mit seinem Fahrzeug (5, 8, 9, 11, 17, 18) einen Parkplatz belegt, der für das wenigstens Fahrzeug (5, 8, 9, 11, 17, 18) ausgewählt ist und zu dem das wenigstens eine Fahrzeug (5, 8, 9, 11, 17, 18) navigiert wird, zur Ansteuerung eines zusätzlichen Parkplatzes von dem Parkleitsystem (10; 31) aufgefordert wird und zu diesem navigiert wird, um den Parkplatz zu einer der angeforderten Ankunftszeit am Zielort entsprechenden Zeit freizumachen.

12. Verfahren nach einem der Ansprüche 1 bis 11, **dadurch gekennzeichnet, dass** bei einer Auswahl von Parkplätzen und einer Streckenführung dahin für eine Vielzahl von Fahrzeugen (5, 8, 9, 11, 17, 18) bzw. Verkehrsteilnehmern, welche dasselbe Ziel ansteuern, diejenigen (5, 9, 11), die frühzeitig zu Parkplätzen nahe des Ziels gelangen, zu Parkplätzen geführt werden, die weiter von dem Zielort entfernt sind als solche Parkplätze, die für die später zu den Parkplätzen nahe des Zielorts gelangenden Fahrzeuge (5, 8, 17, 18) vorbehalten sind.

13. Parkleitsystem (10, 31) zur Zuweisung eines Parkplatzes für ein Fahrzeug und zur Navigation des Fahrzeugs zu dem Parkplatz, insbesondere zur Ausführung des Verfahrens nach einem der Ansprüche 1 bis 9, mit einer Erfassungseinheit zur Erfassung eines Belegungszustands eines Parkplatzes und/oder einer mehrere Parkplätze enthaltenden Parkfläche (1, 2, 3), mit wenigstens einem mobilen Endgerät (30), mit dem eine Anforderung wenigstens eines Fahrzeugführers für einen Parkplatz für sein Fahrzeug (5, 8, 9, 11, 17, 18) zum Erreichen eines Zielortes an das Parkleitsystem (10, 31) übermittelbar ist, welche Anforderung momentane Positionsdaten des Fahrzeugs (5, 8, 9, 11, 17, 18) umfasst, wobei das Parkleitsystem (10, 31) zu einer der Anforderung entsprechenden Auswahl eines verfügbaren Parkplatzes und zum Übermitteln eines Auswahlvorschlags eines Parkplatzes an das mobile Endgerät (30) ausgebildet ist und das Parkleitsystem (10, 31) ein Navigationssystem umfasst, das zur Ermittlung einer Streckenführung von dem Standort des Fahrzeugs (5, 8, 9, 11, 17, 18) zum Zeitpunkt der Parkplatzanforderung bis zu dem verfügbaren Parkplatz ausgebildet ist, **dadurch gekennzeichnet, dass** das Parkleitsystem (10, 31) zu einer mit der Streckenführung rückgekoppelten Parkplatzauswahl ausgebildet ist.

14. Parkleitsystem nach Anspruch 13, **dadurch gekennzeichnet, dass** das Parkleitsystem (10, 31) zu einer Aktualisierung der Parkplatzauswahl und der Routenführung und/oder zu einer Anpassung der Parkplatzauswahl und der Routenführung aneinander ausgebildet ist.

15. Parkleitsystem nach Anspruch 13 oder 14, **dadurch gekennzeichnet, dass** das Parkleitsystem (10, 31) zu einer Durchführung der Parkplatzauswahl und/oder der Streckenführung unter Berücksichtigung eines geschätzten Verhaltens einer Vielzahl von Verkehrsteilnehmern ausgebildet ist.
